# FASCICULE DE BREVET EUROPEEN

(11) **EP 0 643 239 B1**
(45) Date de publication et mention de la délivrance du brevet: **29.04.1998**
(21) Numéro de dépôt: 94401985.0
(22) Date de dépôt: 07.09.1994
(51) Int. Cl.: F16H 3/083

(54) **Boîte de vitesse à embrayage incorporé**
Getriebe mit eingebauter Kupplung
Transmission with incorporated clutch

(30) Priorité: 10.09.1993 FR 9310776
(43) Date de publication de la demande: 15.03.1995
(73) Titulaire: Blanchard, Robert, F-85510 Le Boupere (FR)
(72) Inventeur: Blanchard, Robert, F-85510 Le Boupere (FR)
(74) Mandataire: Dawidowicz, Armand

(56) Documents cités:
- FR-A- 923 171
- FR-A- 1 000 492
- FR-A- 1 046 279
- US-A- 4 841 794

## Description

La présente invention concerne une boîte de vitesse plus particulièrement destinée aux machines auto-tractées telles que les tondeuses à gazon.

Les boîtes de vitesses installées à ce jour sur des machines auto-tractées du type tondeuses à gazon comprennent un carter à l'intérieur duquel est enfermé un arbre primaire généralement disposé parallèle à un arbre secondaire et transmettant à ce dernier son mouvement de rotation au moyen d'un ensemble de pignons et d'une clavette mobile assurant le changement de vitesse. L'arrêt d'entraînement de l'arbre primaire permettant le changement de vitesse est obtenu par un dispositif d'embrayage principal disposé à l'extérieur du carter. Ce dispositif d'embrayage est généralement un mécanisme d'embrayage à friction constitué par une courroie disposée dans une gorge annulaire d'une poulie rotative, cette courroie étant par variation de sa tension maintenue ou non à l'intérieur de la gorge de manière à entraîner ou non l'arbre primaire. Ce type d'embrayage outre son encombrement présente des difficultés de réglage. En effet, on constate que dans de tels mécanismes, l'arbre est parfois entraîné alors que la courroie est détendue. En outre, comme cet embrayage n'est pas un embrayage progressif, il nécessite pour éviter des à-coups l'installation d'un embrayage auxiliaire. Un tel dispositif de transmission est par exemple décrit dans le brevet US-A-4.841.794. Dans ce brevet, l'arbre de changement de vitesse et l'arbre d sortie sont deux arbres coaxiaux susceptibles d'être accouplés entre eux au moyen d'un embrayage auxiliaire à dents ou à bille. L'embrayage principal et l'embrayage auxiliaire sont reliés par un levier d'embrayage.

Le brevet FR-A-92 3171 décrit une boîte de vitesse comprenant un arbre primaire, un arbre secondaire et un arbre intermédiaire. L'embrayage tel que décrit dans ce brevet est un embrayage du type à griffes actionné au moyen d'une fourchette. L'embrayage s'effectue au moyen de clavettes contenues dans la rainure de l'arbre primaire et écartées par un piston tronconique qui agit sous l'effet d'un ou plusieurs ressorts longitudinaux placés à l'intérieur de l'arbre primaire. Ces clavettes verrouillent, lors de leur déplacement, un baladeur en prise avec un premier pignon ou un second pignon en venant se loger à l'intérieur de logements ménagés dans lesdits pignons. En position verrouillée, l'arbre, les clavettes, le piston, les ressorts et le baladeur forment un tout rigide qui tourne en bloc. Ce mouvement de rotation est transmis à l'arbre intermédiaire qui lui-même le transmet à l'arbre de sortie. Cette boîte de vitesse est encombrante et nécessite trois arbres pour pouvoir fonctionner.

Le brevet FR-A-1.000.492 décrit une boîte de vitesse comportant trois arbres, un arbre primaire muni de deux ou plusieurs pignons conique en prise constante avec un nombre égal de pignons pouvant entraîner, par l'intermédiaire d'un embrayage du type baladeur, un train fou de pignons en prise constante avec des pignons non solidaires entre eux mais pouvant être rendus solidaires séparément de l'arbre ou des arbres secondaires. Cette boîte de vitesse est complexe et nécessite un grand nombre d'arbres. En outre, les éléments nécessaires à la transmission d'un mouvement de rotation de l'arbre moteur sont nombreux.

Le brevet FR-A-1.046.279 décrit un dispositif de changement de vitesse pour automobile constitué d'un arbre primaire portant un embrayage centrifuge et un train de roues dentées respectivement en prise permanente avec un train de roues dentées portées par un arbre secondaire. L'arbre primaire est disposé partiellement à l'intérieur du carter, la portion de l'arbre primaire portant le dispositif d'embrayage centrifuge étant disposée à l'extérieur du carter de la boîte de vitesse. L'amenée en prise de chaque roue avec l'arbre secondaire s'effectue au moyen d'un organe mobile axialement le long de l'arbre secondaire et qui, lors de son déplacement axial, vient en contact sélectif avec le bord périphérique intérieur d'une roue d'un train de roues porté par l'arbre secondaire de manière à rendre solidaire sélectivement cette roue avec l'arbre secondaire. Ainsi, dans certains modes de réalisation, des bossages à ressort faisant saillie de rainures ménagées dans ledit arbre secondaire sont engagés dans des fraisures d'une roue dentée. Chaque bossage est solidaire d'une bielle qui se termine par un bourrelet angulaire, ce bourrelet portant un manchon d'enclenchement qui peut glisser sur un prolongement de diamètre réduit de l'arbre secondaire. Ce manchon déplace les bielles et les bossages plus ou moins profondément dans les rainures de l'arbre du changement de vitesse. Un tel dispositif demeure encombrant et complexe.

Le but de la présente invention est de pallier les inconvénients précités en proposant une boîte de vitesse associée à un mécanisme d'embrayage progressif plus fiable permettant en outre d'intégrer l'ensemble dans un même boîtier de manière à obtenir une boite de vitesse complète très compacte.

Un autre but de la présente invention est de simplifier la conception de la boîte de vitesse en particulier en diminuant le nombre de pièces de manière à rendre la boîte de vitesse moins onéreuse.

A cet effet, l'invention a pour objet une boîte de vitesse pour machines autotractées telles que des tondeuses à gazon, du type comprenant un arbre primaire équipé d'un train de pignons montés cinématiquement solidaires en rotation de ce dernier, cet arbre primaire étant disposé au moins partiellement à l'intérieur d'un carter à l'intérieur duquel est en outre disposé un arbre secondaire équipé d'un train de pignons disposés coaxiaux et montés libres à rotation autour dudit arbre, chaque pignon du train de pignons de l'arbre primaire étant respectivement maintenu en prise permanente avec un pignon du train de pignons de l'arbre secondaire, l'arbre primaire étant entraîné en rotation au moyen d'un mécanisme réducteur constitué d'un organe menant moteur, tel qu'une vis sans fin, en prise avec un organe mené, tel qu'au moins une roue dentée, susceptible d'être accouplé ou désaccouplé dudit arbre primaire au moyen d'un mécanisme d'embrayage porté par l'arbre primaire, le mouvement de rotation dudit arbre primaire étant transmis à l'arbre secondaire au moyen d'un organe mobile axialement le long de l'arbre secondaire et qui, lors de son déplacement axial, vient en contact sélectif avec le bord périphérique intérieur d'un pignon du train de pignons portés par l'arbre secondaire de manière à rendre solidaire sélectivement ce pignon avec l'arbre secondaire, caractérisée en ce que l'arbre primaire et le mécanisme d'embrayage sont disposés à l'intérieur du carter et en ce que le mécanisme d'embrayage est un embrayage à cônes, dont les cônes, montés libres à coulissement et cinématiquement solidaires en rotation de l'arbre primaire, sont disposés à l'intérieur d'un alésage axial dudit organe mené et viennent, au cours de leur rapprochement, en prise avec des portées coniques dudit organe mené.

Selon une forme de réalisation préférée de l'invention, l'organe mobile est une clavette montée sur l'arbre secondaire, cette clavette qui affecte la forme d'une dent de rochet étant disposée à l'intérieur d'une rainure longitudinale ménagée dans l'arbre secondaire ou dans une bague fendue montée fixe sur l'arbre secondaire, cette clavette étant déplaçable axialement au moyen d'une bague coulissant sur l'arbre secondaire et montée solidaire de ladite clavette.

D'autres caractéristiques et avantages de l'invention apparaîtront encore à la lecture de la description détaillée qui suit et des dessins joints dans lesquels :
La figure 1 représente une vue en coupe d'une boîte de vitesse conforme à l'invention;
la figure 2 représente une vue identique à la figure 1 d'une boîte de vitesse équipée d'un double embrayage;
la figure 3 représente une vue en perspective d'une dent d'une roue dentée venant pénétrer dans l'interstice ménagé entre deux dents d'une roue dentée lui faisant face ;
la figure 4 représente une vue en coupe d'une variante de la boîte de vitesse représentée à la figure 1 ;
la figure 5 représente une vue schématique partielle du levier de sélection de vitesse ;
la figure 6 représente une vue en coupe de la boîte de vitesse de la figure 2 équipée d'une marche arrière ; et
la figure 7 représente une vue droite partielle de la figure 6 représentant uniquement les éléments constitutifs de la marche arrière.

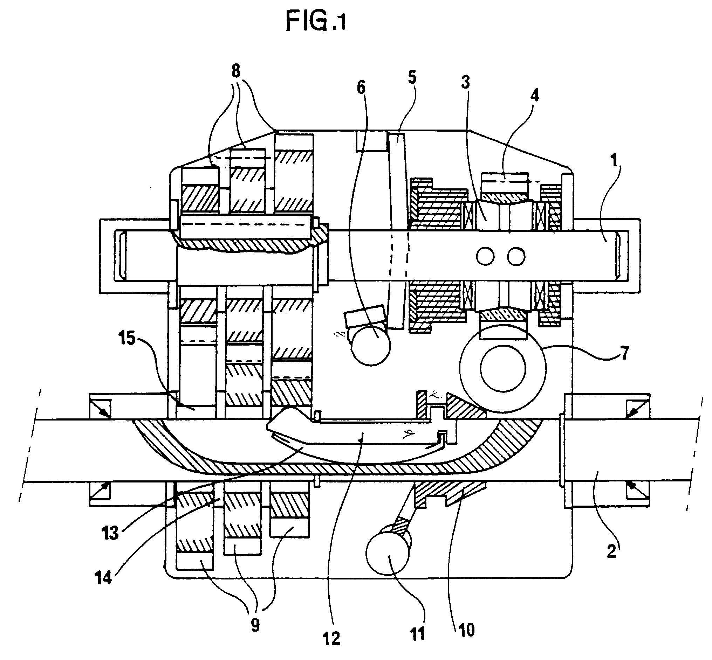

Conformément à la figure 1, la boîte de vitesse, objet de l'invention, susceptible en particulier d'être installée sur des machines auto-tractées telles que des tondeuses à gazon, comprend un carter à l'intérieur duquel sont disposés un arbre primaire 1 et un arbre secondaire 2. Ces arbres sont généralement parallèles pour une simplicité de construction et de fonctionnement. L'arbre secondaire 2 constitue généralement l'arbre d'entraînement des roues de la machine auto-tractée. Quant à l'arbre primaire 1, il est relié au moteur par un mécanisme réducteur approprié. Les arbres primaire et secondaire sont respectivement équipés d'un train de pignons. L'arbre primaire 1 comporte un train de pignons 8 montés cinématiquement solidaires à rotation dudit arbre. L'arbre secondaire 2 comporte un train de pignons 9 disposés coaxiaux et montés libres à rotation autour dudit arbre. En outre, chaque pignon 8 du train de pignons de l'arbre primaire 1 est en prise permanente respectivement avec un pignon 9 de l'arbre secondaire 2.

Le fonctionnement d'un tel ensemble est le suivant l'arbre primaire 1 est entraîné en rotation au moyen d'un mécanisme réducteur constitué d'un organe menant tel qu'une vis sans fin 7 en prise avec un organe mené tel qu'une roue dentée 4. La vis sans fin 7 est montée solidaire à son extrémité d'une poulie entraînée en rotation au moyen d'une courroie qui relie la poulie au moteur. La roue dentée 4 entraînée en rotation est susceptible d'être accouplée à, ou désaccouplée de, l'arbre primaire 1 au moyen d'un mécanisme d'embrayage approprié. Le mécanisme d'embrayage représenté à la figure 1 est un mécanisme d'embrayage à cônes dont les cônes 3 sont montés libres à coulissement et cinématiquement solidaires en rotation de l'arbre primaire 1. Ces cônes 3 sont disposés à l'intérieur d'un alésage axial de la roue dentée 4 et viennent au cours de leur rapprochement en prise avec des portées coniques de ladite roue 4. Le rapprochement de ces cônes entraînant le passage à la position embrayée est commandé par un organe d'actionnement approprié tel qu'une fourchette d'embrayage 5 commandée en déplacement par un arbre à cames 6 entraîné en rotation autour d'un axe perpendiculaire à l'axe primaire 1. Lors de son déplacement axial suivant l'axe longitudinal de l'arbre primaire 1, la fourchette 5 coopérant avec un des paliers de support de l'arbre 1 dans le carter entraîne le rapprochement des cônes en les enserrant entre sa face d'attaque et une face d'appui du cône.

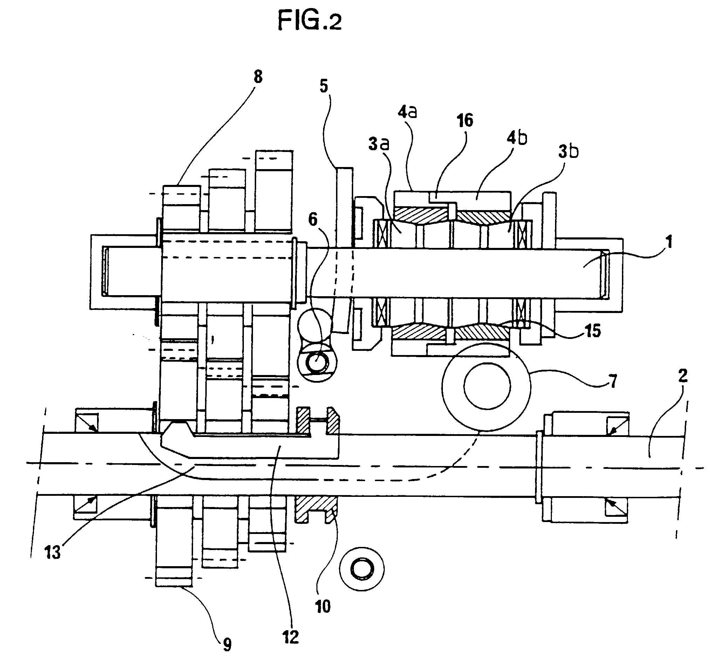

Dans un mode de réalisation préféré de l'invention représenté à la figure 2, il est possible de parfaire le mécanisme d'embrayage afin d'augmenter sa capacité d'entraînement. Dans ce cas, le mécanisme d'embrayage comporte au moins deux roues dentées 4a et 4b en prise respectivement avec au moins un cône d'embrayage 3a, 3b, lesdites roues dentées étant maintenues cinématiquement solidaires en rotation par pénétration des dents 16 en débord saillant de la face frontale d'au moins une des roues dans des interstices 17 de forme complémentaire de la face frontale de la roue lui faisant face de manière à maintenir entre lesdites roues un contact permanent sans jeu en rotation en position embrayée.

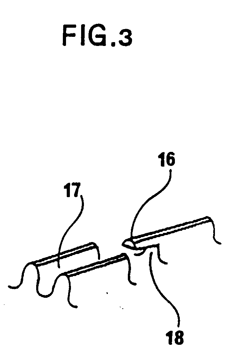

Dans l'exemple représenté à la figure 2, l'une des roues présente un chambrage 18 ménagé sur l'une de ses faces frontales de manière à rendre au moins une dent dépassante afin qu'elle pénètre dans l'interstice entre deux dents de la roue lui faisant face. Ce chambrage 18 est ménagé à une hauteur variable dans l'espace compris entre la circonférence passant par la base des dents et la circonférence passant par le sommet des dents comme le montre la figure 3. Il devient grâce à cette conception possible de disposer d'un mécanisme d'embrayage à cônes comprenant au moins quatre cônes montés libres à coulissement et cinématiquement solidaires en rotation de l'arbre primaire, lesdites paires de cônes étant respectivement disposées coaxiales à l'intérieur de l'alésage axial de roues dentées de manière à venir lors de leur rapprochement en prise avec des portées coniques desdites roues. A travers cette conception particulièrement intéressante du mécanisme d'embrayage transparait l'avantage essentiel de la boîte de vitesse qui réside dans sa compacité. Cette compacité est due au fait que l'arbre primaire porte à la fois un jeu de pignons permettant l'entraînement de l'arbre secondaire et le mécanisme d'embrayage.

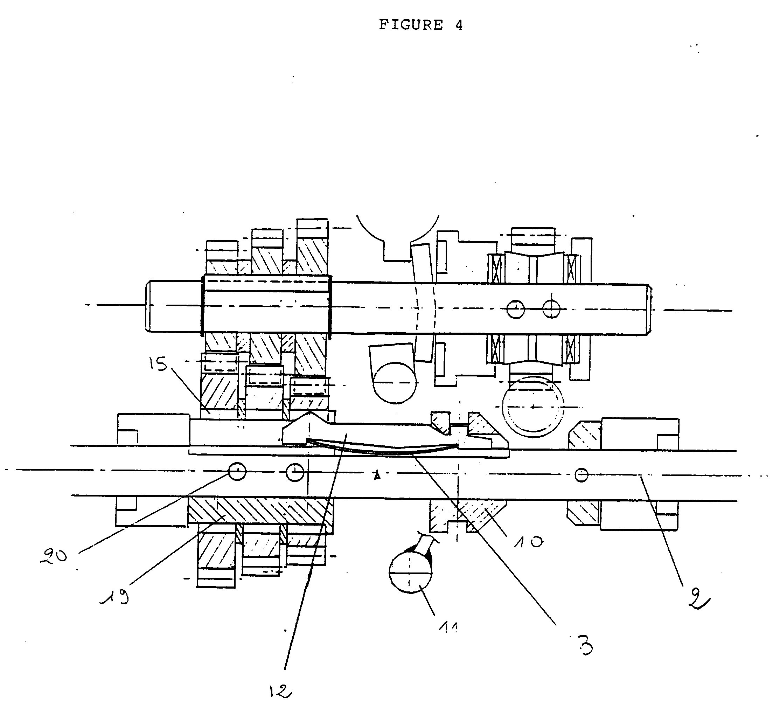

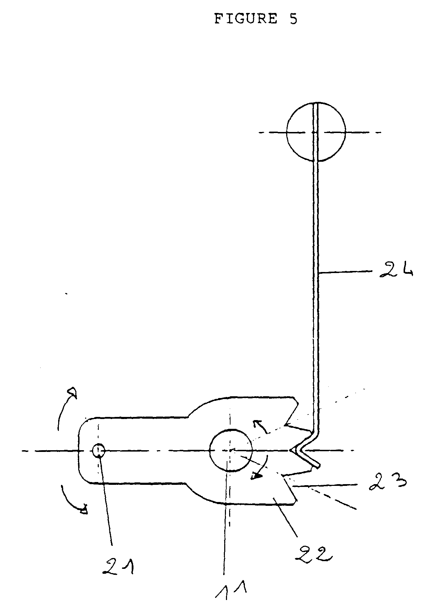

De même, les moyens de transmission du mouvement de rotation de l'arbre primaire à l'arbre secondaire pris en combinaison avec les moyens d'entraînement de l'arbre primaire se révèlent particulièrement intéressants. En effet, le mouvement de rotation de l'arbre primaire 1 est transmis à l'arbre secondaire 2 au moyen d'une clavette mobile 12 montée sur l'arbre secondaire 2 et qui, lors de son déplacement axial, vient en contact sélectif avec une encoche 15 ménagée dans le bord périphérique intérieur d'un pignon 9 porté par l'arbre secondaire de manière à claveter sélectivement ce pignon avec l'arbre secondaire 2. Dans l'exemple représenté à la figure 1, la clavette 12 affecte la forme d'une dent de rochet et est disposée à l'intérieur d'une rainure longitudinale ménagée dans l'arbre secondaire 2. Dans l'exemple représenté à la figure 4, la clavette 12 affecte toujours la forme d'une dent de rochet mais elle est disposée à l'intérieur d'une rainure longitudinale ménagée dans une bague fendue 19 montée fixe sur l'arbre secondaire 2 au moyen d'organes de fixation appropriés. Les orifices destinés à recevoir ces organes de fixation sont représentés en 20 à la figure 4. Cette bague fendue longitudinalement vient se fixer par vissage sur un plat de l'arbre secondaire 2. Un tel mode de réalisation facilite le déplacement de la clavette 12 le long de l'arbre secondaire 2. Cette clavette est déplaçable axialement sur l'arbre secondaire 2 au moyen d'une bague 10 coulissant sur l'arbre secondaire et montée solidaire de ladite clavette 12. Le coulissement de la bague 10 est obtenu par rotation de l'axe de commande ou axe de sélection de vitesse 11. La rotation de cet axe de sélection de vitesse 11 est commandée par un levier de sélection de vitesse 22 monté à rotation sur une tige de commande de sélection non représentée. Cette tige de commande de sélection de vitesse est fixée en 21 sur le levier 22 comme le montre la figure 5. Le levier de sélection de vitesse 22 comporte une série d'encoches 23 qui coopère avec l'extrémité d'une lame-ressort 24 de manière à maintenir le levier 22 dans une position déterminée. Cette lame-ressort 24 est fixée à son autre extrémité au carter. Ainsi, lors de l'actionnement de la tige de commande de sélection de vitesse, le levier de sélection de vitesse 22 est déplacé et immobilisé par coopération des encoches 23 et de la lame-ressort 24 en une position déterminée, ce déplacement entraînant une rotation simultanée de l'axe de sélection de vitesse 11 qui déplace la bague 10 en la faisant coulisser. La clavette 12 constituant un organe de sélection et de commande d'engagement des rapports de vitesse vient, lors de son déplacement axial, en prise avec une encoche 15 ménagée dans le bord périphérique intérieur d'un pignon 9 porté par l'arbre secondaire et est maintenue à l'intérieur de cette encoche au moyen d'un organe de rappel 13. Dans la figure 1, cet organe de rappel 13 est constitué par une lame-ressort intercalée entre la clavette et le fond de la rainure longitudinale ménagée dans l'arbre secondaire. Bien évidemment, tout autre mode de réalisation de la clavette peut être retenu.

On constate dans la figure 1 que le train de pignons des arbres primaire et secondaire est formé de trois pignons permettant à la boîte de vitesses d'entraîner l'arbre secondaire à trois vitesses différentes. Il est possible de prévoir également une marche arrière. Dans ce cas, on peut dans un premier mode de réalisation de l'invention intercaler entre un pignon 8 de l'arbre primaire 1 et un pignon 9 de l'arbre secondaire 2 un pignon intermédiaire monté sur un arbre solidaire du carter, ledit pignon, en prise permanente respectivement avec le pignon 8 de l'arbre primaire 1 et le pignon 9 de l'arbre secondaire 2, permettant à l'arbre secondaire 2 de tourner lors de la sélection du pignon correspondant dans le même sens que l'arbre primaire 1.

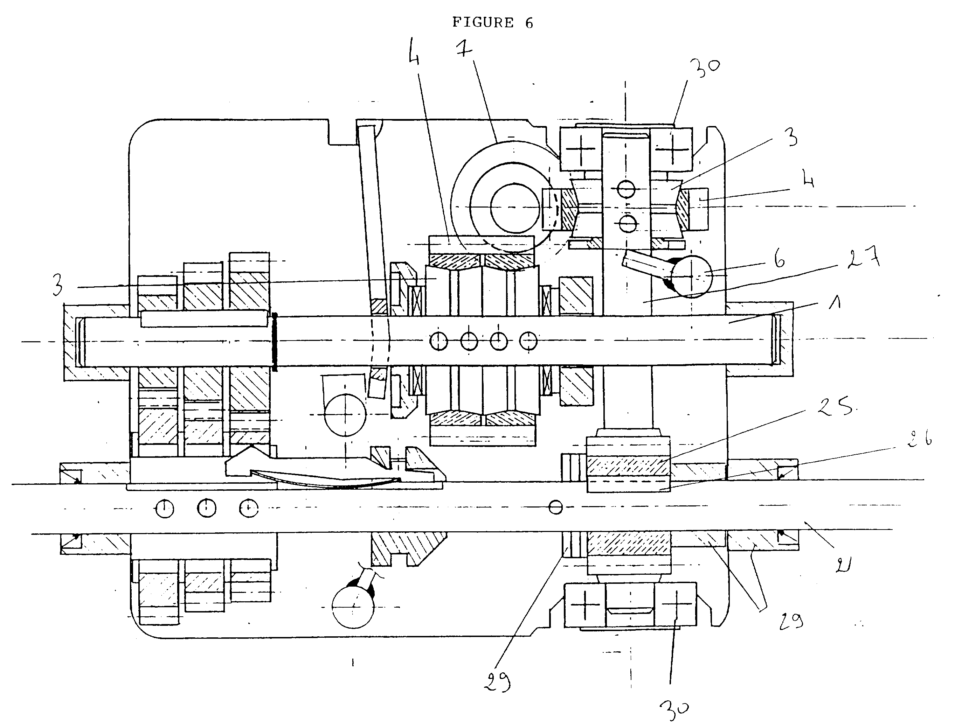

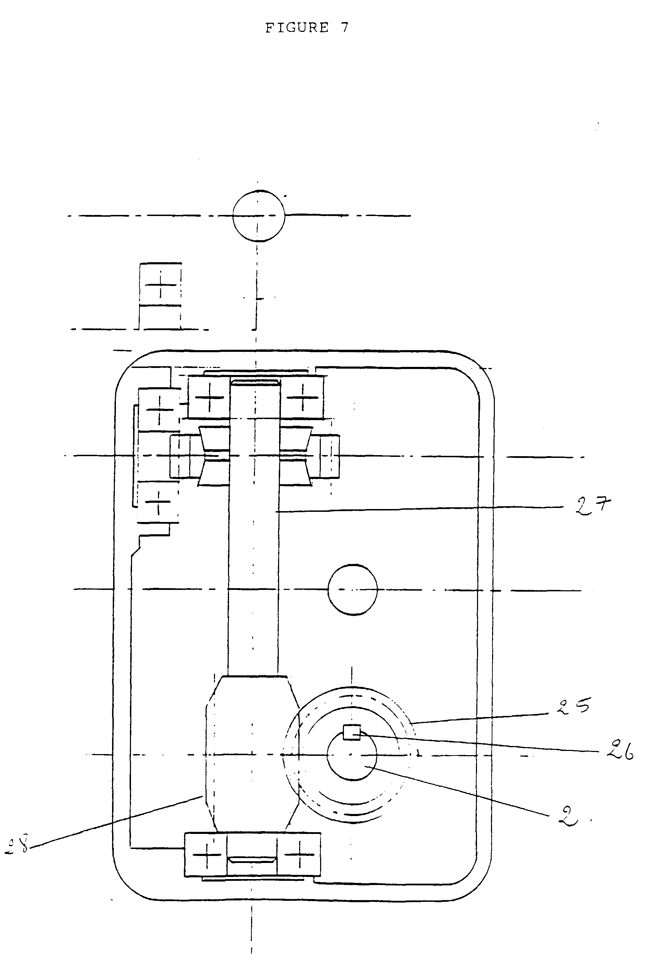

Il est également possible de prévoir une marche arrière conforme à celle représentée aux figures 6 et 7. Dans ce cas, on dispose dans le carter un troisième arbre 27. Cet arbre 27 est orthogonal aux arbres primaire et secondaire. Cet arbre 27 est maintenu en position entre deux parois du carter par des roulements à bille 30. Cet arbre 27 est équipé d'un mécanisme réducteur identique à celui qui équipe l'arbre primaire 1. Il ne sera en conséquence pas décrit. Il est à noter qu'on utilise la même vis sans fin pour l'entraînement en rotation de l'arbre primaire 1 ou de l'arbre de marche arrière 27. Cet arbre 27 comporte à son extrémité voisine du mécanisme réducteur un embrayage à cônes identique à celui de l'arbre 1 et est fileté à son autre extrémité pour constituer une vis sans fin 28. Cette vis sans fin 28 est maintenue constamment en prise avec une roue dentée 25 montée fixe généralement par clavetage 26 sur l'arbre secondaire 2 de telle sorte que la rotation de l'arbre 27 entraîne la rotation de l'arbre 2 lors de l'actionnement de l'embrayage à cônes au moyen d'une fourchette déplacée par un arbre à came 6. On notera également que la roue dentée 25 clavetée sur l'arbre de sortie 2 est enserrée entre des entretoises 29, l'une au moins des entretoises venant en appui sur un palier de l'arbre de sortie 2. Grâce à une telle conception de marche arrière, on utilise des pièces similaires à celles qui avaient été utilisées pour la marche avant d'où un gain en termes de coûts de fabrication.

Enfin, il est généralement nécessaire également d'intercaler entre chaque pignon 9 du train de pignons de l'arbre secondaire une rondelle 14 pour éviter un clavetage simultané de deux pignons avec l'arbre secondaire.

L'invention ne se limite pas aux formes de réalisation décrites ci-dessus mais englobe au contraire un grand nombre de variantes restant dans le cadre des revendications.

## Revendications

1. Boîte de vitesse pour machines autotractées telles que des tondeuses à gazon, du type comprenant un arbre primaire (1) équipé d'un train de pignons (8) montés cinématiquement solidaires en rotation de ce dernier, cet arbre primaire (1) étant disposé au moins partiellement à l'intérieur d'un carter à l'intérieur duquel est en outre disposé un arbre secondaire (2) équipé d'un train de pignons (9) disposés coaxiaux et montés libres à rotation autour dudit arbre (2), chaque pignon (8) du train de pignons de l'arbre primaire (1) étant respectivement maintenu en prise permanente avec un pignon (9) du train de pignons de l'arbre secondaire (2), l'arbre primaire (1) étant entraîné en rotation au moyen d'un mécanisme réducteur constitué d'un organe menant moteur, tel qu'une vis sans fin (7), en prise avec un organe mené, tel qu'au moins une roue dentée (4), susceptible d'être accouplé ou désaccouplé dudit arbre primaire au moyen d'un mécanisme d'embrayage porté par l'arbre primaire, le mouvement de rotation dudit arbre primaire (1) étant transmis à l'arbre secondaire (2) au moyen d'un organe (12) mobile axialement le long de l'arbre secondaire et qui, lors de son déplacement axial, vient en contact sélectif avec le bord périphérique intérieur d'un pignon (9) du train de pignons (9) portés par l'arbre secondaire (2) de manière à rendre solidaire sélectivement ce pignon (9) avec l'arbre secondaire (2),
caractérisée en ce que l'arbre primaire et le mécanisme d'embrayage sont disposés à l'intérieur du carter, en ce que le mécanisme d'embrayage est un embrayage à cônes, dont les cônes (3), montés libres à coulissement et cinématiquement solidaires en rotation de l'arbre primaire, sont disposés à l'intérieur d'un alésage axial dudit organe mené et viennent, au cours de leur rapprochement, en prise avec des portées coniques dudit organe mené et en ce que ledit organe mobile (12) est une clavette (12) montée sur l'arbre secondaire (2).

2. Boîte de vitesse selon la revendication 1,
caractérisée en ce que l'organe mobile est une clavette (12) montée sur l'arbre secondaire (2), cette clavette qui affecte la forme d'une dent de rochet étant disposée à l'intérieur d'une rainure longitudinale ménagée dans l'arbre secondaire (2) ou dans une bague fendue (19) montée fixe sur l'arbre secondaire (2), cette clavette (12) étant déplaçable axialement au moyen d'une bague (10) coulissant sur l'arbre secondaire et montée solidaire de ladite clavette (12).

3. Boîte de vitesse selon la revendication 2,
caractérisée en ce que la clavette (12) constituant un organe de sélection et de commande d'engagement des rapports de vitesse vient, lors de son déplacement axial, en prise avec une encoche (15) ménagée dans le bord périphérique intérieur d'un pignon (9) porté par l'arbre secondaire et est maintenue à l'intérieur de cette encoche au moyen d'un organe de rappel (13).

4. Boîte de vitesse selon l'une des revendications 2 et 3,
caractérisée en ce que l'organe de rappel (13) maintenant la clavette (12) dans une encoche ménagée sur le bord périphérique intérieur d'un pignon (9) est constitué par une lame-ressort intercalée entre la clavette et le fond de la rainure longitudinale ménagée dans l'arbre secondaire (2).

5. Boîte de vitesse selon l'une des revendications 1 à 4,
caractérisée en ce qu'on intercale entre chaque pignon (9) du train de pignons de l'arbre secondaire (2) une rondelle (14) pour éviter un clavetage simultané de deux pignons avec l'arbre secondaire (2).

6. Boîte de vitesse selon l'une des revendications 1 à 4,
caractérisée en ce qu'on intercale entre un pignon (8) de l'arbre primaire (1) et un pignon (9) de l'arbre secondaire (2) un pignon intermédiaire monté sur un arbre solidaire du carter, ledit pignon en prise permanente respectivement avec le pignon (8) de l'arbre primaire (1) et le pignon (9) de l'arbre secondaire (2) permettant à l'arbre secondaire (2) de tourner lors de la sélection du pignon correspondant dans le même sens que l'arbre primaire (1).

7. Boîte de vitesse selon l'une des revendications 1 à 6,
caractérisée en ce que le mécanisme d'embrayage comporte au moins deux roues dentées (4a,4b) en prise respectivement avec au moins un cône d'embrayage (3a,3b), lesdites roues dentées étant maintenues cinématiquement solidaires en rotation par pénétration des dents (16) en débord saillant de la face frontale d'au moins une des roues dans des interstices (17) de forme complémentaire de la face frontale de la roue lui faisant face de manière à maintenir entre lesdites roues un contact permanent sans jeu en position embrayée.

8. Boîte de vitesse selon la revendication 7,
caractérisée en ce que l'une des roues (4b) présente une gorge (18) ménagée sur l'une de ses faces frontales de manière à rendre au moins une dent dépassante afin qu'elle pénètre dans l'interstice (17) entre deux dents de la roue lui faisant face.

9. Boîte de vitesse selon la revendication 8,
caractérisée en ce que la gorge (18) est ménagée à une hauteur variable dans l'espace compris entre la circonférence passant par la base des dents et la circonférence passant par le sommet des dents.

10. Boîte de vitesse selon l'une des revendications 7 à 9,
caractérisée en ce le mécanisme d'embrayage à cônes comprend au moins quatre cônes montés libres à coulissement et cinématiquement solidaires en rotation de l'arbre primaire, lesdites paires de cônes étant respectivement disposées coaxiales à l'intérieur de l'alésage axial de roues dentées de manière à venir lors de leur rapprochement en prise avec des portées coniques desdites roues.

## Patentansprüche

1. Getriebe für selbstfahrende Maschinen, beispielsweise Rasenmähmaschinen, mit einer Antriebswelle (1), die mit einem Block von Zahnrädern (8) versehen ist, die kinematisch drehfest mit letzterer verbunden sind, wobei die Antriebswelle (1) wenigstens teilweise im Inneren eines Gehäuses angeordnet ist, in dessen Innerem ferner eine Abtriebswelle (2) angeordnet ist, die mit einem Block von Zahnrädern (9) versehen ist, die koaxial und um die Welle (2) frei drehbar angeordnet sind, wobei jedes Zahnrad (8) des Blocks von Zahnrädern der Antriebswelle (1) jeweils in permanentem Eingriff mit einem Zahnrad (9) des Blocks von Zahnrädern der Abtriebswelle (2) gehalten ist, wobei die Antriebswelle (1) drehangetrieben ist mittels eines Untersetzungsgetriebe-Mechanismus, der gebildet ist durch ein antreibendes Motororgan, beispielsweise eine Schnecke (7), in Eingriff mit einem angetriebenen Organ, beispielsweise wenigstens einem Zahnrad (4), das dafür geeignet ist, an die Antriebswelle angekuppelt oder von dieser abgekuppelt zu werden mittels eines Kupplungsmechanismus, der von der Antriebswelle getragen wird, wobei die Drehbewegung der Antriebswelle (1) auf die Abtriebswelle (2) übertragen wird mittels eines Organs (12), das axial entlang der Abtriebswelle beweglich ist und das bei seiner axialen Verstellung in selektiven Kontakt mit dem inneren Umfangsrand eines Zahnrades (9) des Blocks von Zahnrädern (9), die von der Abtriebswelle (2) getragen sind, kommt, um selektiv dieses Zahnrad (9) mit der Abtriebswelle (2) zu verbinden, **dadurch gekennzeichnet**, daß die Antriebswelle und der Kupplungsmechanismus im Inneren des Gehäuses angeordnet sind, daß der Kupplungsmechanismus eine Konuskupplung ist, deren Konen (3), die frei verschiebbar und kinematisch drehfest an der Antriebswelle angeordnet sind, im Inneren einer axialen Bohrung des angetriebenen Organs angeordnet sind und im Verlaufe ihrer Annäherung mit konischen Lagerflächen des angetriebenen Organs in Eingriff kommen und daß das bewegliche Organ (12) ein Keil (12) ist, der an der Abtriebswelle (2) angeordnet ist.

2. Getriebe nach Anspruch 1, **dadurch gekennzeichnet**, daß das bewegliche Organ ein Keil (12) ist, der an der Abtriebswelle (2) angeordnet ist, wobei dieser Keil, der die Form eines Klinkenzahnes aufweist, im Inneren einer Längsnut angeordnet ist, die in der Abtriebswelle (2) oder in einem geschlitzten Ring (19), der fest mit der Abtriebswelle (2) verbunden ist, gebildet ist, wobei dieser Keil (12) in Axialrichtung verstellbar ist mittels eines Ringes (10), der an der Abtriebswelle verschiebbar ist und fest mit dem Keil (12) verbunden ist.

3. Getriebe nach Anspruch 2, **dadurch gekennzeichnet**, daß der Keil (12), der ein Organ zur Selektion und zur Steuerung des Eingriffs der Übersetzungsverhältnisse bildet, bei seiner axialen Verstellung in Eingriff mit einer Aussparung (15) kommt, die in dem inneren Umfangsrand eines von der Abtriebswelle getragenen Zahnrades (9) gebildet ist, und im Inneren dieser Aussparung mittels eines Rückstellorganes (13) gehalten ist.

4. Getriebe nach einem der Ansprüche 2 und 3, **dadurch gekennzeichnet**, daß das Rückstellorgan (13), das den Keil (12) in einer an dem inneren Umfangsrand eines Zahnrades (9) gebildeten Aussparung hält, durch ein Federblatt gebildet ist, das sich zwischen dem Keil und dem Boden der in der Abtriebswelle (2) gebildeten Längsnut befindet.

5. Getriebe nach einem der Ansprüche 1 bis 4, **dadurch gekennzeichnet**, daß jeweils zwischen zwei Zahnräder (9) des Blocks von Zahnrädern der Abtriebswelle (2) eine Unterlegscheibe (14) zwischengeschaltet ist, um eine gleichzeitige Keilverbindung von zwei Zahnrädern mit der Abtriebswelle (2) zu verhindern.

6. Getriebe nach einem der Ansprüche 1 bis 4, **dadurch gekennzeichnet**, daß zwischen einem Zahnrad (8) der Antriebswelle (1) und einem Zahnrad (9) der Abtriebswelle (2) ein Zwischenzahnrad zwischengeschaltet ist, das an einer Welle angeordnet ist, die mit dem Gehäuse verbunden ist, wobei sich das Zahnrad jeweils in permanentem Eingriff mit dem Zahnrad (8) der Antriebswelle (1) und dem Zahnrad (9) der Abtriebswelle (2) befindet, wobei es ermöglicht, daß sich die Abtriebswelle (2) bei der Selektion des entsprechenden Zahnrades in derselben Richtung dreht wie die Antriebswelle (1).

7. Getriebe nach einem der Ansprüche 1 bis 6, dadurch gekennzeichnet, daß der Kupplungsmechanismus wenigstens zwei Zahnräder (4a, 4b) aufweist, die sich im Eingriff mit jeweils wenigstens einem Kupplungskonus (3a, 3b) befinden, wobei die Zahnräder kinematisch drehfest gehalten sind durch Eindringung von Zähnen (16) am von der Vorderfläche wenigstens eines der Räder vorspringenden Rand in Lücken (17), die zu der Vorderfläche des ihnen gegenüberliegenden Rades komplementär geformt sind, um in der gekuppelten Position zwischen den beiden Rädern einen permanenten Kontakt ohne Spiel aufrechtzuerhalten.

8. Getriebe nach Anspruch 7, **dadurch gekennzeichnet**, daß eines der Räder (4b) eine Auskehlung (18) aufweist, die an einer seiner Vorderflächen gebildet ist, um wenigstens einen vorstehenden Zahn zu bilden, damit dieser in den Zwischenraum (17) zwischen zwei Zähnen des ihm gegenüberliegenden Rades eindringt.

9. Getriebe nach Anspruch 8, **dadurch gekennzeichnet**, daß die Auskehlung (18) in einer variablen Höhe in dem Zwischenraum zwischen dem Kreis, der durch die Basis der Zähne verläuft, und dem Kreis, der durch die Spitzen der Zähne verläuft, gebildet ist.

10. Getriebe nach einem der Ansprüche 7 bis 9, **dadurch gekennzeichnet**, daß der Konuskupplungs-Mechanismus wenigstens vier Konen aufweist, die frei verschiebbar und kinematisch drehfest an der Antriebswelle angeordnet sind, wobei die Paare von Konen jeweils koaxial im Inneren der Axialbohrung der Zahnräder angeordnet sind, um bei ihrer Annäherung in Eingriff mit den konischen Lagerflächen der Räder zu gelangen.

## Claims

1. Gearbox for self-propelled machines such as lawnmowers, of the type comprising a primary shaft (1) provided with a gear train (8) mounted kinematically fixed in rotation with this latter, this primary shaft (1) being mounted at least partially within a housing within which is further arranged a secondary shaft (2) provided with a gear train (9) disposed coaxially and mounted freely in rotation about said shaft (2), each gear (8) of the gear train of the primary shaft (1) being respectively maintained in permanent engagement with a gear (9) of the gear train of the secondary shaft (2), the primary shaft (1) being driven in rotation by means of a speed reduction mechanism constituted by a driving member such as an endless screw (7), in engagement with a driven member, such as at least one toothed wheel (4) adapted to be coupled with or uncoupled from said primary shaft by means of a clutch mechanism carried by the primary shaft, the movement of rotation of said primary shaft (1) being transmitted to the secondary shaft (2) by means of a component (12) axially movable along the secondary shaft and which, during its axial displacement, comes into contact selectively with the internal peripheral edge of a gear (9) of the gear train (9) carried by the secondary shaft (2) so as selectively to key this gear (9) to the secondary shaft (2),
characterized in that the primary shaft and the clutch mechanism shaft are disposed within the housing, in that the clutch mechanism is a cone clutch, whose cones (3), freely slidably mounted and kinematically fixed in rotation with the primary shaft, are disposed within an axial recess of said driven member and come in the course of their approach to each other into engagement with conical bearing surfaces of said driven member and in that said movable component (12) is a key (12) mounted on the secondary shaft (2).

2. Gearbox according to claim 1,
characterized in that the moving component is a key (12) mounted on the secondary shaft (2), which key (12) having the shape of a ratchet tooth being disposed within a longitudinal groove provided in the secondary shaft (2) or in a split ring (19) mounted fixedly on the secondary shaft (2), this key (12) being displaceable axially by means of a ring (10) sliding on the secondary shaft and mounted fixedly to said key (12).

3. Gearbox according to claim 2,
characterized in that the key (12) constituting a selection and control member for the engagement of the speed ratios comes, during its axial displacement, into engagement with a recess (15) provided in the internal peripheral edge of a gear (9) carried by the secondary shaft and is maintained within this recess by means of a return member (13).

4. Gearbox according to one of claims 2 and 3,
characterized in that the return member (13) maintaining the key (12) in a recess provided in the internal peripheral edge of a gear (9) is constituted by a leaf spring interposed between the key and the bottom of the longitudinal groove provided in the secondary shaft (2).

5. Gearbox according to one of claims 1 to 4,
characterized in that there is interposed between each gear (9) of the gear train of the secondary shaft (2) a ring (14) to avoid simultaneous keying of two gears with the secondary shaft (2).

6. Gearbox according to one of claims 1 to 4,
characterized in that there is interposed between a gear (8) of the primary shaft (1) and a gear (9) of the secondary shaft (2) an intermediate pinion mounted on a shaft fixed to the frame, said pinion in permanent engagement respectively with the gear (8) of the primary shaft (1) and the gear (9) of the secondary shaft (2) permitting the secondary shaft (2) to turn during selection of the corresponding gear in the same direction as the primary shaft (1).

7. Gearbox according to one of claims 1 to 6,
characterized in that the clutch mechanism comprises at least two toothed wheels (4a, 4b) in engagement respectively with at least one clutch cone (3a, 3b), said toothed wheels being maintained kinematically fixed in rotation by penetration of the teeth (16) projecting beyond the front surface of at least one of the wheels into interstices (17) of complementary shape of the front surface of the wheel facing it so as to maintain between said wheels a permanent contact without play in the clutched position.

8. Gearbox according to claim 7,
characterized in that one of the wheels (4b) has a groove (18) provided on one of its front surfaces so as to permit at least one tooth to project so that it will penetrate the interstice (17) between two teeth of the facing wheel.

9. Gearbox according to claim 8,
characterized in that the groove (18) is provided at a variable height in the space comprised between the circumference passing through the base of the teeth and the circumference passing through the tips of the teeth.

10. Gearbox according to one of claims 7 to 9,
characterized in that the cone clutch mechanism comprises at least four cones mounted freely slidable and kinematically fixed in rotation with the primary shaft, said pairs of cones being respectively disposed coaxially in the interior of the axial bore of toothed wheels so as to come, during their approach to each other, into engagement with the conical bearing surfaces of said wheels.
